# EUROPÄISCHE PATENTSCHRIFT

(11) **EP 3 589 504 B1**
(45) Veröffentlichungstag und Bekanntmachung des Hinweises auf die Patenterteilung: **03.06.2020**
(21) Anmeldenummer: 18707295.4
(22) Anmeldetag: 14.02.2018
(51) Int. Cl.: B60C 23/00

(54) **DRUCKLUFTSYSTEM FÜR LENKACHSEN**
COMPRESSED AIR SYSTEM FOR STEERING AXLES
SYSTÈME À AIR COMPRIMÉ POUR ESSIEUX DIRECTEURS

(30) Priorität: 02.03.2017 DE 102017104346
(43) Veröffentlichungstag der Anmeldung: 08.01.2020
(73) Patentinhaber: SAF-HOLLAND GmbH, 63856 Bessenbach (DE)
(72) Erfinder: CHRIST, Armin, 63856 Bessenbach (DE); BORDE, Florian, 63599 Biebergemünd (DE)
(74) Vertreter: Müller Schupfner & Partner Patent- und Rechtsanwaltspartnerschaft mbB
(86) Internationale Anmeldenummer: PCT/EP2018/053674
(87) Internationale Veröffentlichungsnummer: WO 2018/158080

(56) Entgegenhaltungen:
- WO-A1-2016/141310
- GB-A- 191 124 752

## Beschreibung

Die vorliegende Erfindung betrifft ein Druckluftsystem, insbesondere zum Einsatz in Nutzfahrzeugen.

Druckluftsysteme, insbesondere Druckluftsysteme zur Überwachung und Regelung des Reifendruckes an Fahrzeugen sind aus dem Stand der Technik bereits bekannt. Insbesondere haben sich für Nutzfahrzeuge dabei Druckluftsysteme etabliert, bei welchen Druckluft über den hohlkörperförmigen Achskörper, welcher beispielsweise als starre Achse eines Nutzfahrzeughängers ausgebildet ist, und entsprechende Anschlussgeometrien am Achsstummel zu den Reifen übertragen werden kann. Solche Druckluftsysteme sind aber bisher auf den Einsatz in Kombination mit starren Achsen beschränkt. So ist bei den aus dem Stand der Technik bekannten Druckluftsystemen insbesondere ein hoher Platzbedarf für die Druckluftzuführung nachteilig und verhindert den Einsatz in kompakten gelenkten Achsen.

Die WO 2016/141310 A1 offenbart zwar ein Druckluftsystem mit einem Achselement, einem Halteelement und einer Übertragungseinheit.

GB 24752 A offenbart ein Fahrzeug mit einem Druckluftsystem zur Versorgung von luftbefüllten Reifen.

Aufgabe der vorliegenden Erfindung ist es, ein Druckluftsystem bereitzustellen, welches zum einen die Zuführung von Druckluft zu einem gelenkten Rad eines Nutzfahrzeuges erlaubt und zum anderen eine Funktionsintegration ermöglicht, welche insbesondere die begrenzten Platzverhältnisse an der gelenkten Achse eines Nutzfahrzeuges besonders günstig ausnutzt.

Diese Aufgabe wird gelöst mit einem Druckluftsystem gemäß Anspruch 1. Weitere Vorteile und Merkmale der vorliegenden Erfindung ergeben sich aus den abhängigen Ansprüchen.

Erfindungsgemäß umfasst das Druckluftsystem ein Achselement, ein Halteelement und eine Übertragungseinheit, wobei das Achselement hohlkörperförmig und zu einem ersten Ende hin offen ausgebildet ist, wobei das Halteelement am ersten Ende des Achselements derart festgelegt ist, dass es das erste Ende des Achselements luftdicht abschließt, wobei das Halteelement einen Eingriffsabschnitt aufweist, in welchem die Übertragungseinheit abdichtend festlegbar ist, wobei durch das Achselement, das Halteelement und die Übertragungseinheit durch ein Luftvolumen begrenzt wird bzw. dieses umschließt bzw. umgibt, wobei die Justiereinheit einen Kanal aufweist, welcher an seinem ersten Ende in das Luftvolumen mündet und an seinem gegenüberliegenden, zweiten Ende mit einer Drucklufterzeugungseinheit in Verbindung bringbar ist. Das Achselement ist vorzugsweise der Achsstummel einer gelenkten Radaufhängung eines Nutzfahrzeuges. Dabei ist das Achselement hohlkörperförmig und derart ausgebildet, dass innerhalb des Achselements ein Luftvolumen anordenbar ist. Die hohlkörperförmige Ausbildung des Achselements bietet darüber hinaus den Vorteil von Leichtbaueigenschaften, wodurch das Gewicht der mit diesem Achselement ausgestatteten Radaufhängung gesenkt werden kann. Darüber hinaus ist das Achselement an seinem ersten Ende offen ausgebildet, wobei an diesem offenen Ende des Achselements ein Halteelement festlegbar oder festgelegt ist, welches wiederum einen Eingriffsabschnitt aufweist, in welchem eine Übertragungseinheit abdichtend und luftdicht festlegbar ist. Offen ausgebildet heißt im Rahmen der vorliegenden Erfindung, dass zumindest eine mit dem Innenraum verbundene Aussparung vorhanden ist, in welcher die Übertragungseinheit oder das Halteelement gemeinsam mit der Übertragungseinheit luftdicht mit dem Achselement in Eingriff bringbar ist. Das Halteelement ist in einer ersten bevorzugten Ausführungsform ein vom Achselement separates Bauteil, welches am Achselement formschlüssig und/oder kraftschlüssig festlegbar ist. In einer weiteren alternativ bevorzugten Ausführungsform ist das Halteelement ein Abschnitt des Achselements, welcher entweder einstückig mit dem Achselement ausgebildet ist, oder beispielsweise stoffschlüssig am Achselement festgelegt ist. Der Vorteil einer einstückigen Ausbildung des Halteelements mit dem Achselement oder einer stoffschlüssigen Festlegung des Halteelements am Achselement ist, dass eine besonders abdichtende bzw. luftdichte Verbindung mit hoher Festigkeit zwischen dem Achselement und dem Halteelement herstellbar ist. Besonders bevorzugt ist das Halteelement am Achselement festgeschweißt. Demgegenüber ist der Vorteil einer nur formschlüssigen oder form- und kraftschlüssigen Festlegung des Halteelements am Achselement, dass das Halteelement vom Achselement demontiert werden kann und, dass die Herstellung des Achselements selbst aufgrund der weniger komplizierten Querschnittsgeometrie des Achselements sehr einfach ist. Im Fall einer form- und/oder kraftschlüssigen Festlegung des Halteelements am Achselement sind vorzugsweise eines oder eine Vielzahl von Dichtungselementen im Verbindungsbereich zwischen dem Achselement und dem Halteelement vorgesehen. Im Fall einer einstückigen Ausbildung des Achselements gemeinsam mit dem Halteelement ist das kombinierte Bauteil vorzugsweise durch Innenhochdruckumformen hergestellt, wodurch sich auf einfache Weise insbesondere ein Hohlraum am Achselement erzeugen lässt, welcher jeweils durch engere Querschnitte begrenzt ist. Das Halteelement dient der Festlegung der Übertragungseinheit, welche bevorzugt luftdicht mit dem Halteelement in formschlüssigen und/oder kraftschlüssigen Eingriff bringbar ist. Die Übertragungseinheit weist zum einen die Funktion auf, über einen Kanal Druckluft in den Innenraum des Achselements einbringen zu können. Zum anderen weist die Übertragungseinheit vorzugsweise die Funktion einer Lenkwinkelbegrenzung auf. Durch diese Funktionsintegration an der Übertragungseinheit ist es möglich, den geringen Bauraum an der gelenkten Achse eines Nutzfahrzeuges bestmöglich auszunutzen und somit sowohl eine Lenkwinkelbegrenzung als auch die Versorgung mit Druckluft für die an dem Achselement vorgesehenen Fahrzeugräder mit ein und derselben Baugruppe zu gewährleisten. Der Kanal gewährleistet dabei die Druckluftversorgung des von dem Achselement, dem Halteelement und der Übertragungseinheit begrenzten Luftvolumens, da er an seinem zweiten Ende, welches dem in das Luftvolumen mündenden ersten Ende gegenüberliegt, mit der Drucklufterzeugungseinheit, vorzugsweise eines Nutzfahrzeuges, in Verbindung bringbar ist. Dies bietet den Vorteil, dass die ohnehin im Bereich der Achsaufhängung des Nutzfahrzeuges vorhandene Drucklufterzeugungseinheit, welche beispielsweise die Luftfedern eines Nutzfahrzeuges speist, weiterhin auch für die Überwachung und Einstellung des Reifendruckes an den Rädern des Fahrzeuges verwendet werden kann. Die erforderlichen zusätzlichen Druckleitungen sind in diesem Fall nur sehr kurz, wodurch Gewicht und Herstellungskosten gespart werden können. Gegenüber einer Druckluftzuführung über den Mantelbereich des Achselements ist der Vorteil der vorliegenden Erfindung, dass an der Stirnseite des Achsstummels im Bereich des ersten Endes des Achselements die entsprechende Druckluftzuführung stattfindet, wodurch insbesondere ein besonders kurz bauender Achsstummel möglich wird, welcher nahezu auf seiner gesamten Länge entweder der Radlagerung oder mit dem entsprechenden Aufhängungsbereich an einem Lenkschenkel in Verbindung steht. Hierdurch eignet sich die vorliegende Erfindung insbesondere für den Einsatz an gelenkten Achsen.

Erfindungsgemäß weist die Übertragungseinheit ein Adapterelement auf, in welches der Kanal eingebracht ist bzw. sich darin erstreckt, wobei sich das Adapterelement überwiegend entlang einer Längsachse erstreckt und am Eingriffsabschnitt formschlüssig festlegbar ist. Das Adapterelement ist vorzugsweise ein sich im Wesentlichen länglich entlang einer Längsachse erstreckender, bevorzugt zylinderförmiger Körper, in welchen der Kanal eingebracht ist. Das Adapterelement weist Eingriffsmittel zur formschlüssigen Festlegung am Eingriffsabschnitt des Halteelements auf. Die Längsachse ist dabei vorzugsweise parallel oder koaxial zur Stummelachse bzw. Längsachse des Achselements ausgerichtet. Als Eingriffsmittel zum formschlüssigen Eingriff mit dem Eingriffsabschnitt bietet sich insbesondere bevorzugt ein Außengewinde oder beispielsweise entsprechende umlaufende Nuten zur Festlegung von Sprengringen an. Bevorzugt mündet der Kanal an dem Ende des Adapterelements, welches in den Eingriffsabschnitt eingesteckt und formschlüssig an diesem festgelegt ist, in das Luftvolumen innerhalb des Achselements.

Weiterhin bevorzugt weist das Adapterelement ein Außengewinde auf, mit welchem es mit einem am Eingriffsabschnitt vorgesehenen Innengewinde in Eingriff bringbar ist. Besonders bevorzugt ist das Adapterelement mit einem Außengewinde ausgestattet, welches es erlaubt, das Adapterelement in den mit einem Innengewinde ausgestatteten Eingriffsabschnitt einzuschrauben. Auf diese Weise kann sich die Position des Adapterelements relativ zum Eingriffsabschnitt und somit relativ zum am Achselement festgelegten Halteelement genau einstellen lassen. Da vorzugsweise das Adapterelement neben der Bereitstellung des Kanals zur Luftversorgung des Luftvolumens im Achselement auch die Funktion einer Lenkwinkelbegrenzung aufweist, kann auf diese Weise der Lenkwinkel durch Auswählen der entsprechend optimalen Einschraubstellung des Adapterelements am Eingriffsabschnitt genau eingestellt werden. In einer ersten bevorzugten Ausführungsform ist dabei das Gewinde sowohl am Adapterelement als auch am Eingriffsabschnitt als selbst dichtendes Isogewinde ausgebildet. Darüber hinaus ist die Steigung des Gewindes derart gering, dass ein Selbstsicherungseffekt sowohl bei Wirken der Lenkwinkelbegrenzung auf das Adapterelement als auch bei Wirken der Druckkraft auf das in das Luftvolumen ragende Ende des Adapterelements ein Verdrehen des Adapterelements relativ zum Halteelement verhindert wird. Darüber hinaus lässt sich je feingängiger das Gewinde des Adapterelements ist, eine genauere Positionierung des Adapterelements relativ zum Halteelement und zum Achselement erreichen, wodurch eine einfachere und genauere Einstellung der Lenkwinkelbegrenzung vorgenommen werden kann.

Erfindungsgemäß weist das Adapterelement einen Stützabschnitt auf, welcher zur Abstützung an einer Lenkwinkelbegrenzung ausgelegt ist, wobei eine Stützkraft über den Stützabschnitt, das Adapterelement, den Eingriffsabschnitt und das Halteelement an das Achselement übertragbar ist. Der Stützabschnitt des Adapterelements ist vorzugsweise auf der dem Halteelement gegenüberliegenden Seite des Adapterelements angeordnet. Dabei ist der Stützabschnitt vorzugsweise als Schraubenkopf ausgebildet, welcher gleichzeitig den Eingriff mit einem Werkzeug zum Einschrauben des Adapterelements in den Eingriffsabschnitt des Halteelements erlaubt. Der Stützabschnitt ist dabei vorzugsweise vollkörperförmig ausgebildet und in der Lage, Stützkräfte und auch Stöße entsprechend aufzunehmen und über das Adapterelement und den Eingriffsabschnitt und das Halteelement an das Achselement zu übertragen. Als Lenkwinkelbegrenzung wird in diesem Zusammenhang eine entsprechende Anschlagfläche im Bereich der Achsaufhängung bezeichnet, an welche der Stützabschnitt zur Anlage gelangt, wenn ein entsprechender Lenkwinkel erreicht ist, welcher nicht überschritten werden soll, um eine Beschädigung der Räder des Nutzfahrzeuges durch Kontakt mit entsprechenden Karosserieteilen des Nutzfahrzeuges zu verhindern.

Vorzugsweise ist der Stützabschnitt außerhalb des vom Achselement aufgespannten Raumes und beabstandet vom ersten Ende des Achselements angeordnet. Mit anderen Worten ragt der Stützabschnitt des Adapterelements somit signifikant aus dem vom Achselement aufgespannten Volumen heraus und definiert somit ein distales Ende des Verbundes aus Achselement, Halteelement und Übertragungseinheit. Auf diese Weise kann der Stützabschnitt seine Funktion als Lenkwinkelbegrenzung besonders optimal ausführen. Darüber hinaus ist zwischen dem Stützabschnitt und dem Halteelement ausreichend Raum definiert bzw. freigelassen, in welchem entsprechende Anschlussgeometrien zur Einleitung von Druckluft in den im Adapterelement vorgesehenen Kanal angeordnet und festgelegt werden können.

Mit Vorteil ist das Adapterelement in einem ersten Zustand des Druckluftsystemes entlang der Längsachse relativ zum Halteelement verlagerbar, wobei in einem zweiten Zustand des Druckluftsystems ein erstes Sicherungselement vorgesehen ist, welches das Adapterelement gegen Verlagerung und/oder Verdrehung relativ zum Halteelement sichert. Mit anderen Worten ist ein erstes Sicherungselement vorgesehen, welches in einem ersten Zustand des Druckluftsystems derart außer Eingriff mit dem Adapterelement und/oder dem Halteelement steht, dass das Adapterelement längs der Längsachse relativ zum Halteelement und somit relativ zum Achselement, verlagert werden kann. In einem zweiten Zustand ist das erste Sicherungselement dafür ausgelegt, derart am Adapterelement und am Halteelement einzugreifen, dass das Adapterelement und das Halteelement gegen Verlagerung und/oder Verdrehung relativ zueinander gesichert sind. Das erste Sicherungselement ist dabei in einer ersten bevorzugten Ausführungsform ein Sprengring, welcher in entsprechende Eingriffsnuten am Adapterelement und/oder am Halteelement bzw. an der Innenseite des Achselements eingreift und somit das Adapterelement gegen Verlagerung relativ zum Halteelement und/oder zum Achselement sichert. In einer weiteren bevorzugten Ausführungsform ist das erste Sicherungselement eine Kontermutter, welche vorzugsweise an dem am Adapterelement vorgesehenen Außengewinde eingreift und nach Einstellen der gewünschten und optimalen Position des Adapterelements relativ zum Halteelement dieses gegenüber Verdrehung und Verlagerung relativ zum Halteelement sichert.

Weiterhin bevorzugt weist die Übertragungseinheit ein Anschlusselement auf, welches einen Bereich des Kanals aufweist, wobei das Anschlusselement einen Anschlussabschnitt zur luftdichten Festlegung einer Druckluftleitung aufweist. Das Anschlusselement ist somit ein zusätzliches Bauteil der Übertragungseinheit, welches insbesondere bevorzugt einen Teil des Kanals definiert. Der Kanal erstreckt sich somit vorzugsweise im Adapterelement und im Anschlusselement. Das Anschlusselement weist an einem vom Adapterelement abgewandten distalen Ende dabei einen insbesondere zur luftdichten Festlegung einer Druckluftleitung ausgebildeten Anschlussabschnitt auf. Dabei erstreckt sich der Kanal im Anschlusselement hauptsächlich quer zur Längsachse und mündet am distalen Ende des Anschlusselements in diese Druckluftleitung.

Besonders bevorzugt ist das Anschlusselement luftdicht am Adapterelement festlegbar oder festgelegt, wobei sich der Kanal im Adapterelement bereichsweise quer zur Längsachse erstreckt und in den sich quer zur Längsachse erstreckenden Bereich des Kanals im Anschlusselement mündet. Insbesondere bevorzugt weist das Adapterelement einen Bereich des Kanals auf, welcher sich quer zur Längsachse erstreckt, um den Kanal am Adapterelement vorzugsweise vor dem Stützabschnitt in einem am Adapterelement festgelegten Anschlusselement weiterlaufen zu lassen und in Richtung einer Druckluftleitung führen zu können. Das Anschlusselement ist hierfür vorzugsweise über ein Dichtungselement oder eine Vielzahl von Dichtungselementen luftdicht am Adapterelement derart festlegbar, dass die in den einzelnen Abschnitten des Kanals befindliche Druckluft nicht durch eine Kontaktfläche zwischen Anschlusselement und Adapterelement entweichen kann.

Vorzugsweise weist der Kanal im Bereich zwischen dem Adapterelement und dem Anschlusselement einen ringförmigen Abschnitt auf. Der ringförmige Abschnitt des Kanals erstreckt sich vorzugsweise ringförmig um die Längsachse. Dabei ist der Kanal vorzugsweise entweder im Adapterelement, oder im Anschlusselement oder sowohl im Adapterelement als auch im Anschlusselement als jeweilige nutförmige Vertiefung eingebracht. Der ringförmige Abschnitt des Kanals erlaubt es, das Anschlusselement in einem beliebigen Verdrehwinkel relativ zum Adapterelement anzuordnen, wobei der quer zur Längsachse verlaufende Abschnitt des Kanals im Adapterelement nicht zwangsläufig koaxial zum Abschnitt des Kanals, welcher sich im Anschlusselement erstreckt, verlaufen muss. Es kann auf diese Weise das Anschlusselement stets in einer bestimmten Richtung, beispielsweise in vertikaler Richtung nach oben und vom Boden, auf welchem das Nutzfahrzeug abrollt, wegweisend, angeordnet werden und gleichzeitig das Adapterelement jeweils in die gewünschte Verdrehposition gebracht werden, in welcher der Stützabschnitt am Adapterelement eine optimale Lenkwinkelbegrenzung gewährleistet. Es versteht sich, dass für diesen Fall an den Kontaktflächen zwischen dem Anschlusselement und dem Adapterelement entsprechende Dichtungselemente vorgesehen sind, welche sich vorzugsweise ebenfalls ringförmig oder kreisförmig um die Längsachse erstrecken und somit ein Entweichen von Druckluft aus dem ringförmigen Abschnitt des Kanals verhindern.

Weiterhin bevorzugt ist ein zweites Sicherungselement vorgesehen, welches das Anschlusselement form- und/oder kraftschlüssig gegen Verlagerung und/oder Verdrehung relativ zum Adapterelement sichert. Das zweite Sicherungselement ist vorzugsweise ebenfalls als Kontermutter ausgebildet und dafür ausgelegt, das Anschlusselement derart gegenüber dem Adapterelement zu verspannen, dass dieses sowohl luftdicht als auch gegen Verlagerung gesichert am Adapterelement festgelegt ist.

Besonders bevorzugt weist der Stützabschnitt auf seiner zum Eingriffsabschnitt hin gewandten Seite eine Stützfläche zur Abstützung des Anschlusselements auf. Diese Stützfläche des Stützabschnitts zur Abstützung des Anschlusselements weist besonders bevorzugt eine entsprechende Eingriffsgeometrie zum Festlegen einer Dichtung auf. Weiterhin bevorzugt kann an der entsprechenden Stützfläche sowohl am Stützabschnitt als auch am Anschlusselement eine Eingriffsgeometrie, beispielsweise in Form einer zahnartigen Vor- und/oder Rücksprunggeometrie vorgesehen sein, durch welche eine vereinfachte Verdrehsicherung des Stützabschnitts relativ zum Anschlusselement gewährleistet werden kann.

Weiterhin bevorzugt ist am Achselement eine Anschlagfläche ausgebildet, an welcher das Halteelement sich abstützend zur Anlage bringbar oder gebracht ist. Die Anschlagfläche am Achselement ist auf der Innenseite des Achselements vorgesehen und beispielsweise an einem sich nach innen erstreckenden ringförmigen Vorsprung ausgebildet. Weiterhin bevorzugt kann die Anschlagfläche auch an einer sich entsprechend vom ersten Ende des Achselements ausgehend verjüngenden Innengeometrie, bzw. einem sich sprungartig bzw. stufenartig verringernden Innendurchmessers des Achselements vorgesehen sein.

Besonders bevorzugt weist das Achselement an seinem dem ersten Ende gegenüberliegenden zweiten Ende einen Radlagerbereich auf, wobei am zweiten Ende des Achselements weiterhin ein Reifenbefüllsystem vorgesehen ist. Das vorzugsweise als Achsstummel ausgebildete Achselement weist dem ersten Ende im Wesentlichen gegenüberliegend ein zweites Ende mit einem Radlagerbereich auf. Der Radlagerbereich ist insbesondere ein Abschnitt mit zylinderförmiger und/oder konischer Außengeometrie, an welchem ein oder eine Vielzahl von Radlagern bzw. Wälzlagern einer Radlageraufhängung festgelegt sein können. Weiterhin ist am zweiten Ende des Achselements ein Reifenbefüllsystem vorgesehen, welches insbesondere die Möglichkeit einer Luftdurchleitung von einem fest mit dem Achselement verbundenen Statorteil und einem gemeinsam mit dem Fahrzeugrad rotierenden Rotorteil ermöglicht.

Darüber hinaus bevorzugt ist das Achselement, vorzugsweise benachbart zum ersten Ende, an einem Achsschenkel eines Nutzfahrzeuges festlegbar oder festgelegt. Besonders bevorzugt ist das Achselement somit zwischen dem ersten Ende und zwischen dem im Bereich des zweiten Endes vorgesehenen Radlagerbereiches an einem Lenkschenkel eines Nutzfahrzeuges festlegbar. Die Festlegung am Lenkschenkel des Nutzfahrzeuges erfolgt beispielsweise durch Klemmen oder durch entsprechenden formschlüssigen Eingriff durch entsprechende gestufte Eingriffsgeometrien. Insbesondere bevorzugt ist das Achselement dabei besonders kurz, bzw. mit einer besonders geringen Erstreckung entlang der Längsachse ausgebildet, wodurch zum einen Gewicht gespart werden kann, als auch die am Achselement wirkenden Hebelarme verringert werden können. Aufgrund des Ziels der besonders kurz bauenden Auslegung des Achselements ist es bevorzugt, dass die Druckluftzuführung in den Innenraum des Achselements am ersten Ende des Achselements stattfindet.

Weitere Vorteile und Merkmale der vorliegenden Erfindung ergeben sich aus der nachfolgenden Beschreibung mit Bezug auf die beigefügten Figuren, wobei nur in einer der Ausführungsform dargestellte Merkmale auch in Ausführungsformen anderer Figuren Anwendung finden können, sofern dies nicht explizit ausgeschlossen wurde.

Es zeigen:
- Fig. 1: eine Schnittansicht durch eine erste bevorzugte Ausführungsform eines erfindungsgemäßen Druckluftsystems,
- Fig. 2: eine teilweise geschnittene Ansicht einer weiteren bevorzugten Ausführungsform des erfindungsgemäßen Druckluftsystems, und
- Fig. 3: eine Detailansicht der Übertragungseinheit von Fig. 2.

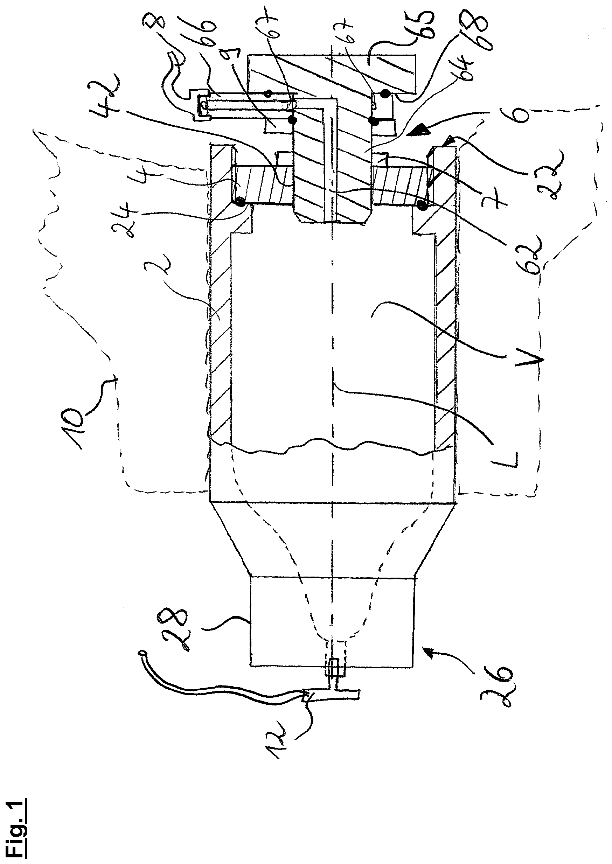

Bei der in Fig. 1 gezeigten, teilweise geschnittenen Ansicht des Druckluftsystems ist ein Achselement 2 vorgesehen, welches in einem, gestrichelt dargestellten, Lenkschenkel 10 eines Nutzfahrzeuges festgelegt und gehalten ist. Das Achselement 2 weist ein erstes Ende 22 und ein dem ersten Ende gegenüberliegendes zweites Ende 26 auf. Am ersten Ende 22 ist das Achselement 2 vorzugsweise offen ausgebildet, wobei in der Öffnung ein Halteelement 4 sowie eine Übertragungseinheit 6 angeordnet und am Achselement 2 festgelegt sind. Bei der in Fig. 1 dargestellten bevorzugten Ausführungsform ist das Halteelement 4 vorzugsweise mit einem Außengewinde vorgesehen, welches mit einem entsprechend in der Öffnung an der Innenseite des Achselements 2 vorgesehenen Innengewinde in Eingriff bringbar ist. Dabei ist weiterhin am Achselement 2 eine Anschlagfläche 24 definiert, gegen welche das Halteelement 4 sich abstützt und zur Anlage bringbar ist, wobei in diesem Kontaktbereich zusätzlich noch ein Dichtungselement vorgesehen ist, welches eine luftdichte Verbindung zwischen dem Halteelement 4 und dem Achselement 2 ermöglicht. Das Halteelement 4 weist vorzugsweise zentriert zu einer Längsachse L einen Eingriffsabschnitt 42 auf, in welchen wiederum ein Adapterelement 64 der Übertragungseinheit 6 in Eingriff bringbar ist. Vorzugsweise ist der Eingriffsabschnitt 42 mit einem Innengewinde ausgestattet, in welchen ein entsprechend am Adapterelement 64 vorgesehenes Außengewinde eingreift. Zur Sicherung des Adapterelements 64 am Halteelement 4 ist ein erstes Sicherungselement 7 vorgesehen, welches im bevorzugten und in Fig. 1 dargestellten Fall als Kontermutter ausgebildet ist. Im Adapterelement 64 erstreckt sich vorzugsweise ein Kanal 62, wobei der überwiegende Teil der Erstreckung des Kanals 62 im Adapterelement 64 entlang oder parallel zur Längsachse L verläuft. Der Kanal 62 ist mit seinem ersten Ende mit dem Luftvolumen V verbunden und steht an seinem zweiten Ende mit der Drucklufterzeugungseinheit des Nutzfahrzeuges (nicht gezeigt) in Fluidverbindung. Das Adapterelement 64 weist darüber hinaus einen Stützabschnitt 65 auf, welcher an dem dem Halteelement 4 gegenüberliegenden distalen Ende des Adapterelements 64 ausgebildet ist. Der Stützabschnitt 65 ist dafür ausgelegt, an einer Anschlagfläche einer Lenkwinkelbegrenzung (nicht angezeigt) der Radaufhängung abstützend zur Anlage zu gelangen. Am Adapterelement 64 ist weiterhin ein Anschlusselement 66 festgelegt, welches eine kreisförmige, insbesondere bevorzugt zur Außengeometrie des zylinderförmigen Abschnitts des Adapterelements 64 passende Aussparung aufweist, mit welcher das Anschlusselement 66 über das Adapterelement 64 übergeschoben werden kann. Dabei gelangt das Anschlusselement 66 an der in Richtung des Halteelements 4 weisenden Stützfläche 68 des Stützabschnitts 65 zur Anlage und wird durch ein zweites Sicherungselement 9 am Adapterelement 64 gehalten. Das Anschlusselement 66 weist einen sich quer zur Längsachse L erstreckenden Teil des Kanals 62 auf, wobei der Kanal 62 im Adapterelement und der Kanal 62 im Anschlusselement unmittelbar, oder wie dargestellt bevorzugt über einen ringförmigen Abschnitt 67 des Kanals 62 miteinander in Verbindung stehen. Der ringförmige Abschnitt 67 ist dafür vorgesehen, dass das Anschlusselement 66 und das Adapterelement 64 in beliebigen Drehwinkelpositionen zueinander positioniert werden können und stets eine Druckluftverbindung zwischen den im Anschlusselement 66 und im Adapterelement 64 definierten Bereichen des Kanals 62 vorhanden ist. Das Anschlusselement 66 ist an seinem quer vom Adapterelement 64 abstehenden Ende mit einem Anschlussflansch zur Festlegung einer Druckluftleitung 8 ausgebildet. Wie durch die schwarzen Punkte in Fig. 1 dargestellt, sind sowohl an der Kontaktfläche zwischen dem Anschlusselement 66 und dem Stützabschnitt 65, wie auch zwischen dem Anschlusselement 66 und dem zweiten Sicherungselement 9 jeweils Dichtungselemente eingebracht, welche das Entweichen von Druckluft aus den jeweiligen Kontaktflächen der einzelnen Bauteile der Übertragungseinheit 6 verhindern. Es begrenzen somit das Achselement 2, das Halteelement 4 sowie die Übertragungseinheit 6 ein im Achselement 2 angeordnetes Volumen V. Es versteht sich, dass dieses Volumen auch durch das am zweiten Ende 26 des Achselements 2 vorgesehene Reifenbefüllsystem 12, welches nur schematisch angedeutet ist, begrenzt wird.

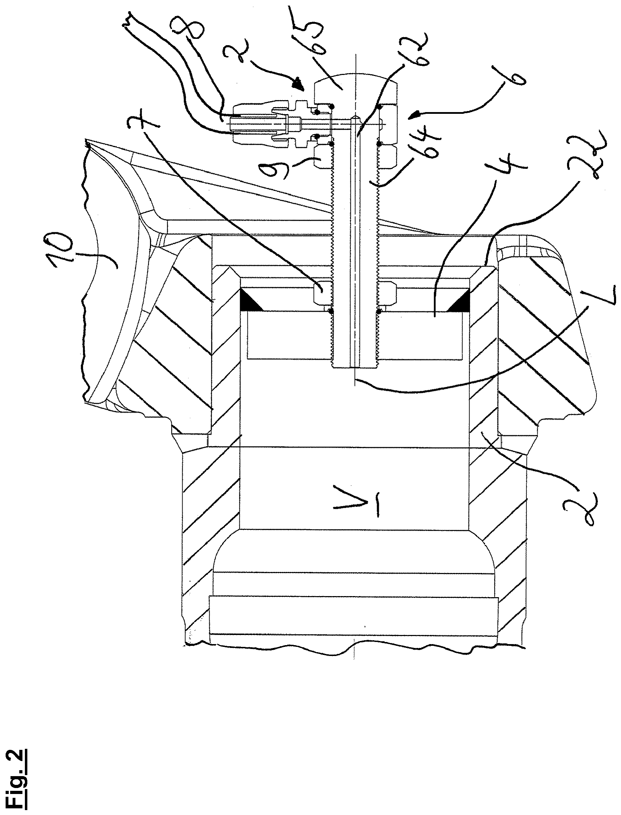

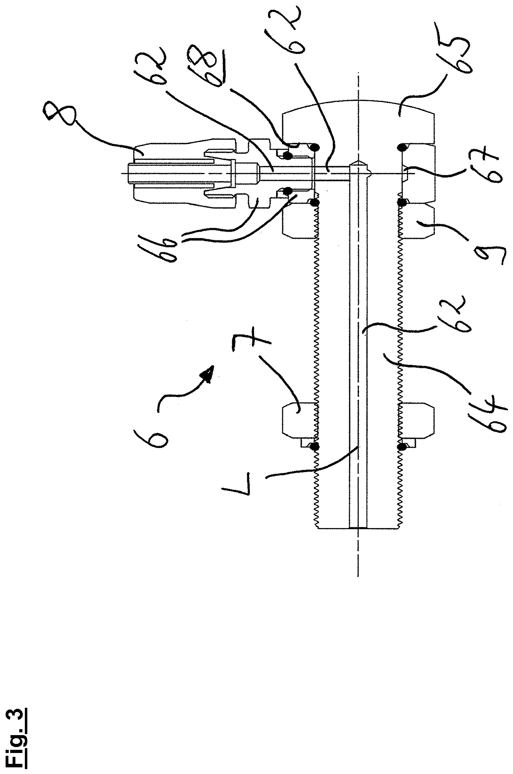

Bei der in Fig. 2 gezeigten, bevorzugten Ausführungsform ist das Halteelement 4 an der Innenwand des Achselements 2 mit einer Kehlnaht festgeschweißt. Dabei ist in dieser Ansicht, das Halteelement 4 und die Übertragungseinheit 6 aus Gründen der Übersichtlichkeit nicht schraffiert, obwohl geschnitten dargestellt. Im Gegensatz zu der in Fig. 1 dargestellten Ausführungsform ist das erste Ende 22 des Achselements 2 innerhalb einer Aussparung des Lenkschenkels 10 angeordnet. Hierdurch sind die Bauteile der Übertragungseinheit 6, welche in Fig. 3 im Detail gezeigt ist, besser gegen Fremdkörper von geschützt. Die an der nichtgezeigten Anschlagfläche zur Anlage gelangende Außenfläche des Stützabschnitts 65 ist gerundet ausgeführt. Die Bauteile der Übertragungseinheit 6 weisen im Wesentlichen die gleichen Eigenschaften auf wie bei der in Fig. 1 gezeigten Ausführungsform.

Fig. 3 zeigt eine vergrößerte Ansicht der Übertragungseinheit 6 von Fig. 2. Das Adapterelement 64 weist dabei an der Außenseite seines sich im Wesentlichen zylinderförmig entlang der Längsachse L erstreckenden Abschnitts ein Außengewinde auf. Dieses Außengewinde ist dafür ausgebildet in den Eingriffsabschnitt 42 des Halteelements 4 einzugreifen. Dabei greift am Außengewinde weiterhin auch ein erstes Sicherungselement 7 und ein zweites Sicherungselement 9 ein. Das erste Sicherungselement 7 kontert das Adapterelement 64 am Halteelement 4 und presst eine Dichtung gegen das Halteelement 4. Das zweite Sicherungselement 9 presst das Anschlusselement 66 gegen die Stützfläche 68 des Stützabschnitts 65, wobei eine Vielzahl von Dichtungselementen, vorzugsweise O-Ringen, vorgesehen ist, welche in den jeweiligen Kontaktbereichen der einzelnen Bauteile angeordnet sind und eine Abdichtung der einzelnen Abschnitte des Kanals 62 erreichen.

**Bezugszeichen:**

| | | | |
|---|---|---|---|
| 2 | - Achselement | 42 | - Eingriffsabschnitt |
| 4 | - Halteelement | 62 | - Kanal |
| 6 | - Übertragungseinheit | 64 | - Adapterelement |
| 7 | - erstes Sicherungselement | 65 | - Stützabschnitt |
| 8 | - Druckluftleitung | 66 | - Anschlusselement |
| 9 | - zweites Sicherungselement | 67 | - ringförmiger Abschnitt |
| 10 | - Lenkschenkel | 68 | - Stützfläche |
| 12 | - Reifenbefüllsystem | L | - Längsachse |
| 22 | - erstes Ende | V | - Luftvolumen |
| 24 | - Anschlagfläche | | |

## Patentansprüche

1. Druckluftsystem umfassend ein Achselement (2), ein Halteelement (4) und eine Übertragungseinheit (6),
wobei das Achselement (2) hohlkörperförmig und zu einem ersten Ende (22) hin offen ausgebildet ist,
wobei das Halteelement (4) am ersten Ende (22) des Achselements (2) derart festgelegt ist, dass es das erste Ende (22) luftdicht abschließt,
wobei das Halteelement (4) einen Eingriffsabschnitt (42) aufweist, in welchem die Übertragungseinheit (6) abdichtend festlegbar ist,
wobei das Achselement (2), das Halteelement (4) und die Übertragungseinheit (6) ein Luftvolumen (V) umschließen,
wobei die Übertragungseinheit (6) einen Kanal (62) aufweist, welcher an seinem ersten Ende in das Luftvolumen (V) mündet und an seinem gegenüberliegenden, zweiten Ende mit einer Drucklufterzeugungseinheit in Verbindung bringbar ist, **dadurch gekennzeichnet, dass** die Übertragungseinheit (6) ein Adapterelement (64) aufweist, in welchem sich der Kanal (62) erstreckt,
wobei sich das Adapterelement (64) überwiegend entlang einer Längsachse (L) erstreckt und am Eingriffsabschnitt (42) formschlüssig festlegbar ist,
wobei das Adapterelement (64) einen Stützabschnitt (65) aufweist, welcher zur Abstützung an einer Lenkwinkelbegrenzung ausgelegt ist,
wobei eine Stützkraft über den Stützabschnitt (65), das Adapterelement (64), den Eingriffsabschnitt (42) und das Halteelement (4) an das Achselement (2) übertragbar ist.

2. Druckluftsystem nach Anspruch 1,
wobei das Adapterelement (64) ein Außengewinde aufweist, mit welchem es mit einem am Eingriffsabschnitt (42) vorgesehenen Innengewinde in Eingriff bringbar ist.

3. Druckluftsystem nach einem der vorhergehenden Ansprüche,
wobei der Stützabschnitt (65) außerhalb des vom Achselement (2) aufgespannten Raumes und beabstandet vom ersten Ende (22) des Achselements (2) angeordnet ist.

4. Druckluftsystem nach einem der vorhergehenden Ansprüche,
wobei das Adapterelement (64) in einem ersten Zustand des Druckluftsystems entlang der Längsachse (L) relativ zum Halteelement (4) verlagerbar ist, wobei in einem zweiten Zustand des Druckluftsystems ein erstes Sicherungselement (7) vorgesehen ist, welches das Adapterelement (64) gegen Verlagerung und/oder Verdrehung relativ zum Halteelement (4) sichert.

5. Druckluftsystem nach einem der vorhergehenden Ansprüche,
wobei die Übertragungseinheit (6) ein Anschlusselement (66) aufweist, welches einen Bereich des Kanals (62) aufweist,
wobei das Anschlusselement (66) einen Anschlussabschnitt zur luftdichten Festlegung einer Druckluftleitung (8) aufweist.

6. Druckluftsystem nach Anspruch 5,
wobei das Anschlusselement (66) luftdicht am Adapterelement (64) festlegbar ist, wobei sich der Kanal (62) im Adapterelement (64) bereichsweise quer zur Längsachse (L) erstreckt und in den sich quer zur Längsachse (L) erstreckenden Bereich des Kanals (62) im Anschlusselement (66) mündet.

7. Druckluftsystem nach einem der Ansprüche 5 oder 6,
wobei der Kanal (62) im Bereich zwischen dem Adapterelement (64) und dem Anschlusselement (66) einen ringförmigen Abschnitt (67) aufweist.

8. Druckluftsystem nach einem der Ansprüche 5 bis 7,
wobei ein zweites Sicherungselement (9) vorgesehen ist, welches das Anschlusselement (66) form- und/oder kraftschlüssig gegen Verlagerung und/oder Verdrehung relativ zum Adapterelement (64) sichert.

9. Druckluftsystem nach einem der Ansprüche 5 bis 8,
wobei der Stützabschnitt (65) auf seiner zum Eingriffsabschnitt (42) hin gewandten Seite eine Stützfläche (68) zur Abstützung des Anschlusselements (66) aufweist.

10. Druckluftsystem nach einem der vorhergehenden Ansprüche,
wobei am Achselement (2) eine Anschlagfläche (24) ausgebildet ist, an welcher das Halteelement (4) sich abstützend zur Anlage bringbar ist.

11. Druckluftsystem nach einem der vorhergehenden Ansprüche,
wobei das Achselement (2) an seinem, dem ersten Ende (22) gegenüberliegenden zweiten Ende (26) einen Radlagerbereich (28) aufweist,
wobei am zweiten Ende (26) ein Reifenbefüllsystem (12) vorgesehen ist.

12. Druckluftsystem nach einem der vorhergehenden Ansprüche,
wobei das Achselement (2), vorzugsweise benachbart zum ersten Ende (22), an einem Lenkschenkel (10) eines Nutzfahrzeuges festlegbar ist.

## Claims

1. A compressed air system comprising an axle element (2), a holding element (4) and a transmission unit (6)
wherein the axle element (2) is hollow and open towards a first end (22), wherein the holding element (4) is fixed to the first end (22) of the axle element (2) in such a way that it seals the first end (22) in an airtight manner,
wherein the holding element (4) has an engagement section (42) in which the transmission unit (6) can be sealingly fixed,
wherein the axle element (2), the holding element (4) and the transmission unit (6) enclose an air volume (V),
wherein the transmission unit (6) has a channel (62) which opens into the air volume (V) at its first end and can be brought into communication with a compressed air generating unit at its opposite, second end,
**characterised in that** the transmission unit (6) comprises an adapter element (64) in which the channel (62) extends,
wherein the adapter element (64) extends predominantly along a longitudinal axis (L) and can be positively fixed to the engagement section (42),
wherein the adapter element (64) has a support section (65) adapted to be supported on a steering angle limit,
wherein a supporting force can be transmitted to the axle element (2) via the support section (65), the adapter element (64), the engagement section (42) and the holding element (4).

2. The compressed air system according to claim 1,
wherein the adapter element (64) has an external thread with which it is engageable with an internal thread provided on the engagement section (42).

3. The compressed air system according to any one of the preceding claims,
wherein the support section (65) is arranged outside the space defined by the axle element (2) and at a distance from the first end (22) of the axle element (2).

4. The compressed air system according to any one of the preceding claims, wherein in a first state of the compressed air system the adapter element (64) is displaceable along the longitudinal axis (L) relative to the holding element (4), wherein in a second state of the compressed air system a first securing element (7) is provided which secures the adapter element (64) against displacement and/or rotation relative to the holding element (4).

5. The compressed air system according to any one of the preceding claims, wherein the transmission unit (6) comprises a connecting element (66) comprising a portion of the channel (62),
wherein the connecting element (66) has a connecting section for the airtight fixing of a compressed air line (8).

6. The compressed air system according to claim 5,
wherein the connecting element (66) can be fixed airtightly to the adapter element (64),
wherein the channel (62) in the adapter element (64) extends in regions transverse to the longitudinal axis (L) and opens into the region of the channel (62) extending transverse to the longitudinal axis (L) in the connecting element (66).

7. The compressed air system according to any one of claims 5 or 6,
wherein the channel (62) has an annular section (67) in the region between the adapter element (64) and the connecting element (66).

8. The compressed air system according to any one of claims 5 to 7,
wherein a second securing element (9) is provided which secures the connecting element (66) in an interlocking and/or force-fit manner against displacement and/or rotation relative to the adapter element (64).

9. The compressed air system according to any one of claims 5 to 8,
wherein the support section (65) has a supporting surface (68) for supporting the connecting element (66) on its side facing the engagement section (42).

10. The compressed air system according to any one of the preceding claims, wherein a stop surface (24) is formed on the axle element (2), against which stop surface (24) the holding element (4) can be brought to rest in a supported manner.

11. The compressed air system according to any one of the preceding claims, wherein the axle element (2) has a wheel bearing region (28) at its second end (26) opposite the first end (22),
wherein a tire inflation system (12) is provided at the second end (26).

12. The compressed air system according to any one of the preceding claims, wherein the axle element (2), preferably adjacent to the first end (22), can be fixed to a steering leg (10) of a commercial vehicle.

## Revendications

1. Système à air comprimé, comportant un élément d'essieu (2), un élément de retenue (4) et une unité de transmission (6),
dans lequel
l'élément d'essieu (2) est réalisé en forme de corps creux et est ouvert vers une première extrémité (22),
l'élément de retenue (4) est immobilisé à la première extrémité (22) de l'élément d'essieu (2) de manière à refermer la première extrémité (22) de façon étanche à l'air,
l'élément de retenue (4) comprend une portion d'engagement (42) dans laquelle l'unité de transmission (6) peut être immobilisée de façon étanche,
l'élément d'essieu (2), l'élément de retenue (4) et l'unité de transmission (6) enferment un volume d'air (V),
l'unité de transmission (6) comprend un canal (62) dont la première extrémité débouche dans le volume d'air (V) et dont la seconde extrémité opposée peut être amenée en communication avec une unité de génération d'air comprimé,
**caractérisé en ce que**
l'unité de transmission (6) comprend un élément adaptateur (64) dans lequel s'étend le canal (62),
l'élément adaptateur (64) s'étend majoritairement le long d'un axe longitudinal (L) et peut être immobilisé par coopération de forme à la portion d'engagement (42),
l'élément adaptateur (64) comprend une portion d'appui (65) conçue pour l'appui contre une limitation d'angle de braquage,
une force de soutien peut être transmise à l'élément d'essieu (2) par l'intermédiaire de la portion d'appui (65), de l'élément adaptateur (64), de la portion d'engagement (42) et de l'élément de retenue (4).

2. Système à air comprimé selon la revendication 1,
dans lequel
l'élément adaptateur (64) comprend un filetage par lequel il peut être amené en engagement avec un taraudage prévu sur la portion d'engagement (42).

3. Système à air comprimé selon l'une des revendications précédentes, dans lequel
la portion d'appui (65) est disposée à l'extérieur de l'espace défini par l'élément d'essieu (2) et à distance de la première extrémité (22) de l'élément d'essieu (2).

4. Système à air comprimé selon l'une des revendications précédentes, dans lequel
dans un premier état du système à air comprimé, l'élément adaptateur (64) est mobile le long de l'axe longitudinal (L) par rapport à l'élément de retenue (4), et
dans un second état du système à air comprimé, il est prévu un premier élément de blocage (7) qui bloque l'élément adaptateur (64) à l'encontre d'un déplacement et/ou d'une rotation par rapport à l'élément de retenue (4).

5. Système à air comprimé selon l'une des revendications précédentes, dans lequel
l'unité de transmission (6) comprend un élément de raccordement (66) qui comprend une zone du canal (62), et
l'élément de raccordement (66) comprend une portion de raccordement pour l'immobilisation étanche à l'air d'une conduite à air comprimé (8).

6. Système à air comprimé selon la revendication 5,
dans lequel
l'élément de raccordement (66) peut être immobilisé de façon étanche à l'air sur l'élément adaptateur (64), et
le canal (62) dans l'élément adaptateur (64) s'étend localement transversalement à l'axe longitudinal (L) et débouche dans la zone du canal (62) dans l'élément de raccordement (66), zone qui s'étend transversalement à l'axe longitudinal (L).

7. Système à air comprimé selon l'une des revendications 5 ou 6,
dans lequel
le canal (62) comprend une portion annulaire (67) dans la zone entre l'élément adaptateur (64) et l'élément de raccordement (66).

8. Système à air comprimé selon l'une des revendications 5 à 7,
dans lequel
il est prévu un second élément de blocage (9) qui bloque l'élément de raccordement (66) en coopération de forme et/ou de force à l'encontre d'un déplacement et/ou d'une rotation par rapport à l'élément adaptateur (64).

9. Système à air comprimé selon l'une des revendications 5 à 8,
dans lequel
sur sa face tournée vers la portion d'engagement (42), la portion d'appui (65) présente une surface d'appui (68) pour l'appui de l'élément de raccordement (66).

10. Système à air comprimé selon l'une des revendications précédentes, dans lequel
une surface de butée (24) est réalisée sur l'élément d'essieu (2), contre laquelle l'élément de retenue (4) peut être amené en appui.

11. Système à air comprimé selon l'une des revendications précédentes, dans lequel
à sa seconde extrémité (26) opposée à la première extrémité (22), l'élément d'essieu (2) comprend une zone de palier de roue (28), et
un système de gonflage de pneumatique (12) est prévu à la seconde extrémité (26).

12. Système à air comprimé selon l'une des revendications précédentes, dans lequel
l'élément d'essieu (2) peut être immobilisé sur un bras de direction (10) d'un véhicule utilitaire, de préférence au voisinage de la première extrémité (22).
